# EUROPEAN PATENT APPLICATION

(11) **EP 2 460 906 A1**
(43) Date of publication of application: **06.06.2012**
(21) Application number: 10804113.8
(22) Date of filing: 28.07.2010
(51) Int. Cl.: C23C 8/50, C21D 1/06, C21D 1/10, C23C 8/26, C23C 8/32, C23C 8/38, C23C 22/12, C23C 22/18, C23C 22/34

(54) **STEEL MEMBER HAVING NITROGEN COMPOUND LAYER AND PROCESS FOR PRODUCING SAME**

(30) Priority: 31.07.2009 JP 2009178497
(71) Applicant: Nihon Parkerizing Co., Ltd., Tokyo 103-0027 (JP)
(72) Inventor: KONISHI, Tomoyoshi, Tokyo 103-0027 (JP); IKEDA, Yoshihiro, Tokyo 103-0027 (JP)
(74) Representative: HOFFMANN EITLE
(86) International application number: PCT/JP2010/004782
(87) International publication number: WO 2011/013362

(57) **Abstract**

[Problems]

To provide a process for production wherein a compound layer formed on a surface of an iron and steel material by nitriding treatment is prevented from being oxidized by induction quenching, so that unevenness in film thickness between different portions of an oxidization-inhibiting film may not easily occur, with the result that a nitrogen-containing compound layer obtained after high-frequency heating may uniformly remain.

[Means for solving]

A process for duplex heat treatment of combined nitriding treatment and induction quenching treatment on an iron and steel material, further comprising a chemical conversion treatment step for forming a chemical conversion film on a nitrogen compound layer formed on the iron and steel material by the nitriding treatment, after the nitriding treatment and before the induction quenching treatment.

## Description

### TECHNICAL FIELD

The present invention relates to quenched iron and steel materials to be used as machine structural parts excellent in mechanical strengths such as contact pressure strength, abrasion resistance and flexural fatigue strength, processes for production thereof (processes for duplex heat treatment) and treatment liquids therefor.

### BACKGROUND ART

Surface hardening treatment such as nitriding treatment (including nitrocarburizing treatment), carburizing/quenching, induction quenching and the like have conventionally been made on machine structural parts made of cast iron and steel, in order to improve mechanical strengths.
Among them, a compound layer composed of a nitride formed on the outermost surface by nitriding treatment is known to be excellent in slidability, resistant to abrasion and high in seizure resistance (hereinafter referred to as Effect I by a nitrogen compound layer). However, nitriding treatment is in general poor in contact pressure strength, fatigue strength and the like in comparison with carburizing/quenching and induction quenching. Therefore, when a roller pitting test is carried out for example, the nitrogen compound layer may detach from a steel substrate. For that reason, it has widely been believed that a nitrogen compound layer is rather detrimental in a fatigue test under a high contact pressure in excess of 2 GPa. The inventors have found that this is attributable, not to the compound layer itself, but to the fact that the depth of a hardened layer of a substrate that supports the compound layer is small. Specifically, through a nitriding treatment alone, the depth of a hardened layer immediately below was insufficient to fully exploit the good slidability of the compound layer on the outermost surface.

Incidentally, it is known that, regarding a steel material containing nitrogen, a martensitic structure obtained after quenching is finer than that of a steel material not containing nitrogen, and therefore the hardness is higher and also that the depth of hardening will increase with an improvement in quenchability. In other words, nitriding treatment may also be utilized as nitrogen-diffusing pretreatment for forming a nitrogen diffusion layer for the purpose of improving quenchability (hereinafter referred to as Effect II by the formation of a nitrogen compound layer). Specifically, characteristics obtained using this Effect II are attributable, not to the action of the nitrogen compound layer itself, but to the effect of nitrogen diffused in the steel material immediately below the nitrogen compound layer that is produced when forming the nitrogen compound layer.
A nitrogen-containing martensitic structure obtained by quenching is known to possess, in addition to the high hardness and the improvement in quenchability discussed above, temper softening resistance, high contact pressure strength and high fatigue strength for resistance to crack occurrence and growth.

When induction quenching is carried out directly after nitriding treatment, a quenching temperature at or higher than the Ac3 transformation point where an austenitic structure may be obtained is needed, the temperature usually being selected in the range of 750 to 1,050°C. A nitrogen compound layer formed at a nitriding temperature of 570°C is made of combined iron and nitrogen and, when reheated at 650°C or higher in an ambient atmosphere, will be oxidized to decompose, with the result that nitrogen of the nitrogen compound layer will be released as nitrogen gas at the outermost surface and the nitrogen compound layer will be eliminated. This has been reported long before (Nonpatent Reference 1).

Usually a duplex heat treatment technique by nitriding treatment and quenching only utilizes Effect II by a nitrogen diffusion layer obtained through nitriding treatment, not using Effect I of a nitrogen compound layer formed through nitriding treatment. Specifically, it is taken for granted that the nitrogen compound layer will be eliminated during quenching as a step subsequent to the nitriding treatment. There are a great number of disclosures of this technique, including the duplex heat treatment in Patent References 1 to 5.

Patent Reference 6 discloses a process for duplex heat treatment in which nitriding treatment is carried out at a temperature of 600°C or higher to form a nitrogen compound layer of 5 µm or less, followed by induction quenching to obtain a quenched member having a nitrogen compound layer of 2 µm or less. The reason why nitriding condition is set to an elevated temperature of 600°C or higher in this technique, is because a higher concentration of nitrogen diffused deeper into a steel material may be expected at a higher temperature. However, a nitrogen compound layer obtained at a nitriding treatment temperature beyond 600°C is low in hardness, not exhibiting Effect I. Specifically, this technique also expects only Effect II by the nitrogen compound layer, the remaining nitrogen compound layer of 2 µm or less being negligible.

Since it was widely misbelieved that a nitrogen compound layer is rather detrimental in fatigue strength at a high contact pressure as described above, there are almost no techniques for simultaneously possessing Effects I and II by nitrogen compounds. As an unprecedented technique for simultaneously possessing Effects I and II for solving the problem of a nitride layer being damaged or eliminated by heating at an elevated temperature by induction quenching the nitride layer formed on a surface by such nitriding treatment, Patent Reference 7 discloses a process in which a surface after nitriding treatment is coated with a gas nitriding/ion nitriding inhibitor composed of silicon oxide, a carburization inhibitor and an oxidation inhibitor at a thickness of 1 to 3 mm, before quenching.

According to the process of Patent Reference 7, however, while oxidation phenomenon may be prevented during heating, since heat conductivity is low due to the film thickness of 1 mm or more, a cooling rate during quenching required for martensitic transformation will be insufficient, making it difficult in fact to obtain the desired fine martensite.

Also, Patent Reference 8, in which attempts were made to utilize both Effects I and II, discloses an iron and steel member for quenching wherein a hard nitride layer is formed on the surface of the iron and steel member, and further as a top layer thereof, an inorganic compound layer containing at least one metal oxide selected from the group consisting of Ti, Zr, Hf, V, Nb, Ta, Cr, W, Mo and Al is formed.

Patent References 7 and 8 relate to procedures for producing steel members simultaneously possessing a large depth of hardening and a nitrogen-containing compound layer, by forming the nitrogen-containing compound layer by nitriding treatment and then coating it with a protective film so that the compound layer may not be oxidized or decomposed during induction quenching. However, both the procedures are of coating protective films by application and/or dipping from treatment liquids, and therefore, have trouble in uniform application over complex shapes such as gear surfaces.
Patent Reference 1: Japanese Patent No. 3193320
Patent Reference 2: Japanese Patent No. 3327386
Patent Reference 3: Japanese Patent No. 3145517
Patent Reference 4: Japanese Unexamined Patent Publication No. HEI 7-90364
Patent Reference 5: Japanese Unexamined Patent Publication No. 2007-154254
Patent Reference 6: Japanese Unexamined Patent Publication No. 2007-77411
Patent Reference 7: Japanese Unexamined Patent Publication No. SHO 58-96815
Nonpatent Reference 1: Netsu Shori (heat treatment), Vol. 16, No. 4, P206, 1976
Patent Reference 8: Japanese Unexamined Patent Publication No. 2008-038220

### SUMMARY OF THE INVENTION

### PROBLEMS TO BE SOLVED BY THE INVENTION

In the light of such problems as described above, the present invention has an object to provide a process for production in which unevenness in film thickness between different portions of an oxidization-inhibiting film may not easily occur, by using chemical conversion treatment as a procedure for uniformly forming a nitrogen compound layer-protecting film, with the result that a nitrogen-containing compound layer obtained after induction heating may uniformly remain, and to provide, using the same process, an iron and steel material in which a nitrogen compound layer of 550 or higher in hardness HV and 1 µm or more formed by nitriding treatment remains on a surface layer and a hardness distribution region having an HV higher than 550 containing a fine martensitic structure containing nitrogen under the layer exists over a distance of 200 µm or more from the surface.

### MEANS FOR SOLVING THE PROBLEMS

The present invention (1) is a process for duplex heat treatment of combined nitriding treatment and induction quenching treatment on an iron and steel material, further comprising a chemical conversion treatment step for forming a chemical conversion film on a nitrogen compound layer formed on the iron and steel material by the nitriding treatment, after the nitriding treatment and before the induction quenching treatment.

The present invention (2) is the process for duplex heat treatment according to the invention (1), wherein the iron and steel material, in which a nitrogen compound layer of 550 or higher in hardness HV and 1 µm or more formed by the nitriding treatment remains on a surface layer and a hardness distribution region having an HV higher than 550 containing a fine martensitic structure containing nitrogen under the layer exists over a distance of 200 µm or more from the surface, is obtained by inhibiting decomposition of the nitrogen compound layer during the induction quenching by the chemical conversion film.

The present invention (3) is the process for duplex heat treatment according to the invention (1) or (2), wherein the chemical conversion film is 0.1 to 50 g/m² in film weight.

The present invention (4) is the process for duplex heat treatment according to any one of the inventions (1) to (3), wherein the chemical conversion film contains at least one metal selected from the group consisting of Fe, Cr, Ni, Al, Zn, Mn, Mg, Zr, V, Hf Si and Ca and at least one compound selected from the group consisting of a phosphate, a carbonate, an oxide, a hydroxide and a fluoride.

The present invention (5) is the process for duplex heat treatment according to any one of the inventions (1) to (4), wherein forming the nitrogen compound layer is carried out by salt-bath nitrocarburizing treatment, gas nitriding treatment, gas nitrocarburizing treatment or plasma nitriding treatment, by which a nitrogen-containing compound layer of 1 to 30 µm is formed on the surface of the iron and steel material.

The present invention (6) is the process for duplex heat treatment according to any one of the inventions (1) to (5), wherein the temperature for the nitriding treatment is 350 to 600°C and the temperature reached during the induction quenching is 750 to 860°C.

The present invention (7) is an iron and steel member obtained by the duplex heat treatment defined in any one of the inventions (1) to (6), in which a nitrogen compound layer of 550 or higher in hardness HV and 1 µm or more remains on a surface layer and a hardness distribution region having an HV higher than 550 containing a fine martensitic structure containing nitrogen under the layer exists over a distance of 200 µm or more from a surface.

The present invention (8) is a chemical conversion treatment liquid containing a component to be deposited by using, as a driving force, etching of a surface of a compound layer containing nitrogen and iron, a component to be deposited by supersaturation or a component to be deposited by an electric driving force using an external power source, which is used, after nitriding treatment and before induction quenching treatment of an iron and steel material, for forming a chemical conversion film on the compound layer formed on the iron and steel material by the nitriding treatment for the purpose of preventing decomposition of the compound layer.

### EFFECT OF THE INVENTION

According to the iron and steel members having a nitrogen compound layer, the processes for production thereof (processes for duplex heat treatment) and the treatment liquids therefor according to the present invention, formation by chemical conversion treatment of a compound layer-protecting film with no unevenness in film thickness between different portions of an oxidation-inhibiting film on a compound layer obtained by nitriding can effectively inhibit the oxidative degradation of the compound layer due to subsequent induction quenching. As the result that the compound layer having good slidability remains, an iron and steel member obtained according to the present invention retains mechanical strengths, sliding resistance, abrasion resistance and the like based on the characteristics of the compound layer. Further, the iron and steel member that is improved in quenchability by the diffused nitrogen can obtain a large depth of hardening and a high hardness by the induction quenching, and therefore, can be utilized suitably in application for machine structural parts demanding high mechanical strengths such as contact pressure strength, abrasion resistance and flexural fatigue strength.

### BEST MODE FOR CARRYING OUT THE INVENTION

Iron and steel materials to which the present invention is applied are not particularly limited, examples of which may include carbon steels, low-alloy steels, medium-alloy steels, high-alloy steels and cast irons. Materials preferred in view of cost are carbon steels, low-alloy steels and the like. For example, carbon steels for machine structural use (S20C to S58C) are preferred as carbon steels and nickel chrome steels (SNC 236 to 836), nickel chrome molybdenum steels (SNCM 220 to 815), chrome molybdenum steels (SCM 415 to 445 and 822), chrome steels (SCr 415 to 445), manganese steels for machine structural use (SMn 420 to 443), manganese chrome steels (SMnC 420 and 443) and the like are preferred as low-alloy steels. These steel materials may not necessarily be thermal refining steels (H steels) for which quenchability is warranted by refining, but may be normalized steels having ferritic-pearlitic structures that are unrefined. Also, according to the present invention, while a higher surface hardness tends to be obtained for alloy steels, a sufficiently large depth of hardening may be obtained even for carbon steels by virtue of the quenchability-improving action of Effect II by nitrogen. Further, according to the present invention, by virtue of Effect II by nitrogen, thermal refining steels may not necessarily be used, and sufficient mechanical strengths may be obtained for steels having ferritic-pearlitic structures that are unrefined.

A nitrogen compound layer on the surface of an iron and steel material according to the present invention can be obtained by surface hardening treatment in which active nitrogen is diffused on the surface of the iron and steel material to produce a hard and stable nitride. While nitrogen compound layers are not particularly limited, they are preferably those composed of nitrides that are usually based on Fe as the matrix constituent and contain Ti, Zr, Mo, W, Cr, Mn, Al, Ni, C, B, Si and the like. Methods for forming nitrogen compound layers may include salt-bath nitriding treatment, such as Tufftride treatment, Isonite treatment and Palsonite treatment, gas nitrocarburizing treatment, plasma nitriding treatment and other nitriding treatment by which a nitrogen compound layer having Effect I and a region immediately below it where nitrogen is diffused are formed. The temperature for nitriding heat treatment by which a nitrogen compound layer for having Effect I is formed is preferably 600°C or lower, more preferably 580°C or lower, and even more preferably 570°C or lower. While a nitrogen compound layer obtained at a treatment temperature higher than 600°C will have an increased thickness, Effect I will no longer be expected because of decreased hardening. The lower limit is not particularly limited, but is 350°C, for example.
The thickness of a nitrogen compound layer obtained by nitriding treatment before induction quenching is not particularly limited, but is usually 1 to 30 µm, preferably 2 to 20 µm, and more preferably 3 to 15 µm.

According to the present invention, after forming a nitrogen compound layer on a steel material, a chemical conversion film containing at least one metal selected from the group consisting of Fe, Cr, Ni, Al, Zn, Mn, Mg, Zr, V, Hf, Si and Ca and at least one compound selected from the group consisting of a phosphate, a carbonate, an oxide, a hydroxide and a fluoride is formed by chemical conversion treatment. More specifically, examples of chemical conversion films containing a phosphate may include Fe₃PO₄, FePO₄, Zn₂Fe(PO₄)₂, Zn₂Ca(PO₄)₂, CrPO₄, Ni₃(PO₄)₂, AlPO₄, Zn₃(PO₄)₂, Mn₃(PO₄)₂, Mn₃(PO₄)₄, Mg₃(PO₄)₂, Zr₃(PO₄)₄, VPO₄, Hf₃(PO₄)₄, Si₃(PO₄) and Ca₃(PO₄)₂. These may contain hydrogen ions in place of some cations, as appropriate. Examples of chemical conversion films containing a carbonate may include Fe₂(CO₃)₂, Cr₂(CO₃)₃, NiCO₃, Al₂(CO₃)₃, ZnCO₃, MnCO₃, Mn(CO₃)₂, MgCO₃, Zr(CO₃)₂, V₂(CO₃)₃, Hf(CO₃)₂, Si(CO₃)₂ and CaCO₃. Examples of chemical conversion films containing an oxide may include Fe₂O₃ Fe₃O₄, Cr₂O₃ NiO, Al₂O₃, ZnO, MnO, MnO₂, MgO, ZrO₂, V₂O₃, HfO₂, SiO₂ and CaO. Examples of chemical conversion films containing a hydroxide may include Fe(OH)₂, Fe(OH)₃, Cr(OH)₃, Ni(OH)₂, Al(OH)₃, Zn(OH)₂, Mn(OH)₂, Mn(OH)₄, Mg(OH)₂, Zr(OH)₄, V(OH)₃, Hf(OH)₄, Si(OH)₄ and Ca(OH)₂, Examples of chemical conversion films containing a fluoride or an oxide may include FeF₂, FeF₃, CrF₃, NiF₂, AlF₃, ZnF₂, MnF₂, MnF₄, MgF₂, ZrF₄, VF₃, HfF₄, SiF₄ and CaF₂. The chemical conversion film according to the present invention may only have to contain at least one compound selected from the group consisting of a phosphate, a carbonate, an oxide, a hydroxide and a fluoride, as described above, which may contain hydrated water. Also, metallic components in a deposited chemical conversion film may contain components, such as iron, that are eluted and incorporated from the nitrogen-containing compound layer, in addition to supply based on the treatment liquid.

The chemical conversion treatment according to the present invention refers to deposition of a treatment liquid component by using, as a driving force, etching of a surface of a nitrided, nitrogen-containing compound layer with a chemical conversion liquid, deposition from a treatment liquid by supersaturation without etching of a nitrogen-containing compound layer or deposition of a treatment liquid component by an electric driving force using an external power source. Thus, any conventional chemical conversion may basically be applied as a chemical conversion treatment according to the present invention. Also, water rinsing or drying of iron and steel materials after the chemical conversion treatment may be made appropriately according to the same step as typical chemical conversion treatment. By way of example, a procedure for a forming chemical conversion film based on zinc phosphate according to various processes using a treatment liquid in which phosphate ions and Zn ions are dissolved will now be described briefly. According to the chemical conversion treatment using etching as driving force, a work to be treated is immersed in an acidic liquid in which phosphate ions and Zn ions are dissolved, so that after a nitrogen-containing compound layer is etched, insoluble zinc phosphate will deposit and form on the nitrogen-containing compound layer as the pH of the surface increases (shifts toward the neutral side). Also, warming the treatment liquid or operation such as adding caustic soda in small portions to move the pH of the treatment liquid toward the neutral side will decrease the solubility of zinc phosphate, with the result that insoluble zinc phosphate will deposit without etching of a nitrogen-containing compound layer, using its surface as the nucleus. Also, when the work is immersed in the treatment liquid and electrolysis is carried out using it as an anode, etching of the nitrogen-containing compound layer will occur and excessive cations will be supplied to the liquid, with the result that the solubility near the interface will decrease and an insoluble zinc phosphate film abundant in Fe as dissolved from the nitrogen-containing compound layer will deposit. Alternatively, when electrolysis is carried out using it as a cathode, hydroxide ion will increase in concentration as hydrogen is produced on the nitrogen-containing compound layer, which causes the pH on the interface to increase with no dissolution of the surface to allow the formation of insoluble zinc phosphate, and further when the electrolysis voltage is high, of a combined film of zinc phosphate and zinc hydroxide.

For such chemical conversion treatment, a typical chemical conversion process that is intended to impart to iron and steel materials rust prevention, insulation, noise prevention, slidability such as abrasion resistance, a base for adhesion, wettability adjustment, processability for cold working and the like may be used. A film in an amount of 0.1 to 50 g/m² is formed. More preferably, the amount is 0.3 to 30 g/m² and even more preferably the amount is 1 to 10 g/m². When the amount of film is less than 0.1 g/m², the oxidation-inhibiting effect of the nitrogen compound layer by chemical conversion film may not sufficiently be provided. Also, an amount more than 50 g/m² is not preferred because the protective effect of the chemical conversion film is saturated and an excessive amount of time is needed for the formation of a chemical conversion film. Also, when the chemical conversion film is crystallizable, it is preferred to form a film in a minimum thickness of 1 g/m² or more because gaps tend to exist between crystals. When the amount of a film is 50 g/m², the thickness of the film will be in the order of 20 to 50 µm, which is overwhelmingly small in comparison with Patent Reference 7 in which films of millimeter order are coated, and is a thickness that will not inhibit quenchability.

The largest advantage of the procedure of forming a chemical conversion film for protecting a nitrogen compound layer is that it is possible to uniformly form a protective film by a convenient means in an inexpensive manner. Thereby, unevenness in film thickness between different portions of an oxidation-inhibiting film may not easily occur, with the result that a nitrogen-containing compound layer obtained after high-frequency heating may remain in a uniform manner. As another advantage of the chemical conversion treatment, stringent film conditions where high-temperature and prolonged wetting is retained at fluid trapping portions, which tend to cause problems during formation of a protective film by application, may be avoided. Thereby, the decomposition of the nitrogen compound layer during film formation may be minimized. When chemical conversion treatment involving etching of a nitrogen compound layer is selected, however, it will be necessary to form in advance a nitrogen compound layer having a thickness that is greater than the film thickness to be etched by the chemical conversion treatment, because part of the nitrogen compound layer at the surface layer will be dissolved.

After the compound layer-protecting film is formed, induction quenching will be carried out as high-frequency heating for 0.3 to 5 seconds, so that a predetermined heating temperature at 750 to 860°C may be reached. After the predetermined temperature is reached, it will immediately be cooled with a coolant so that a fine martensitic structure containing nitrogen may be obtained. The heating temperature is more preferably 770 to 840°C, and even more preferably 780 to 830°C. Also, the heating time is more preferably 0.8 to 3 seconds, and more preferably 1 to 2 seconds.
With heating at 750°C or lower, sufficient austenization will not be attained at such temperature level so that quenching may be insufficient, even if nitrogen is incorporated therein. Heating at a temperature higher than 860°C is not preferred because excessive austenite remaining in the martensitic structure immediately below the compound layer tends to be produced. With heating for a time less than 0.3 second, sufficient austenization will not be attained so that quenching may be insufficient, in spite of diffused nitrogen. Heating for a time more than 5 seconds is not preferred because the effect of heating time will almost reach saturation and the action of the compound layer-protecting film will decrease.
By using the compound layer-protecting film according to the present invention, the nitrogen compound layer will sufficiently be protected from oxidation and/or decomposition even when the atmosphere for the high-frequency heating is air. Also, the high-frequency heating may be carried out in a vacuum atmosphere, an inert atmosphere with argon gas or nitrogen gas, a low-oxygen atmosphere, a hydrocarbon-based reducing atmosphere, an ammonia gas atmosphere or the like, if facilities therefor can be provided.
During the high-frequency heating, a multistage temperature rise including preheating may be carried out, for example when a work is large. After quenching by the high-frequency heating, a tempering operation may be carried out under appropriate conditions, in a manner similar to a typical quenching procedure.

After a series of heat treatment, when the work treated according to the present invention is incorporated as a machine part, the compound layer-protecting film may be removed or not, as necessary. The compound layer-protecting film may easily be removed because the film is low in hardness in comparison with the compound layer and may appropriately be removed by, for example, lapping treatment, emery paper sanding, buffing, shot blasting, shot peening or the like.

Although, after the high-frequency heating, the nitrogen compound layer will remain by virtue of the compound layer-protecting film according to the present invention, it may not have to remain at 100 % based on the compound layer before the high-frequency heating. 1 µm or more in film thickness only needs to be secured as minimum film thickness of the compound layer. More preferably, 2 µm or more in film thickness remains, and even more preferably, 3 µm or more in film thickness remains. When oxidized portions exist on the surface layer of the nitrogen compound layer, since such portions are fragile and lower in hardness, most of them will be removed along with the protecting film when the above-mentioned step of removing the compound layer-protecting film is carried out.

According the duplex heat treatment described above, an iron and steel member having a nitrogen compound layer of 1 to 30 µm in thickness on the surface and simultaneously having a hard layer containing a fine martensitic structure containing nitrogen with a hardness distribution that gradually decreases from immediately below the nitrogen compound layer toward the inside, wherein the nitrogen compound layer has a hardness HV of 630 or higher in terms of Vickers hardness, and the hard layer containing a fine martensitic structure has a hardness distribution in which a region having a hardness HV higher than 550 exists over a distance of 200 µm or more, preferably 400 µm or more, and more preferably 600 µm or more from the surface, can be obtained. The upper limit is not particularly limited, but is 1.5 mm for example.

By the treatment according to the present invention, machine parts having simultaneously Effects I and II of the nitrogen compound layer can be obtained. Specifically, machine parts subjected to the treatment according to the present invention have high slidability and seizure resistance by virtue of the nitrogen compound layer formed on the outermost surface as well as high temper softening resistance, resistance to crack occurrence and growth, contact pressure strength, high fatigue resistance and a large depth of hardening.

Quenching by high-frequency heating by the duplex heat treatment according to the present invention is carried out at 750 to 860°C, the quenching temperature being sufficiently low in comparison with induction quenching and carburizing/quenching that are typically carried out at a temperature higher than 900°C. This is extremely advantageous in heat deformation and/or quenching crack, enabling a significant reduction of postcutting steps for adjusting dimensional accuracy to be made after conventional induction quenching and/or carburizing/quenching.
As mentioned before, iron and steel materials to which the present invention is applied are not necessarily refined, by virtue of the quenchability-improving action of Effect II by nitrogen and sufficient mechanical strengths can be obtained even for steels with ferritic-pearlitic structures that are unrefined. Also, while higher surface hardness tends to be obtained for alloy steels, a sufficiently large depth of hardening may be obtained even for inexpensive carbon steels, by virtue of Effect II by nitrogen. For example, a carbon steel for machine construction such as S 45 C can be turned into a heat-treated material having sufficient hardness and a hardness profile with a sufficient depth. Also, even the S 45 C, it may not necessarily be a thermal refining steel material and even when the heat treatment according to the present invention is applied to steel members with ferritic-pearlitic structures that are unrefined, sufficient martensitic transformation may occur so that heat-treated machine parts having sufficient mechanical strengths may be obtained.
As described above, by the application of the present invention, improvement in mechanical strengths of parts, reduction of cutting steps and/or substitution with inexpensive materials enable downsizing and weight saving of whole machine parts by downsizing of the parts as well as substantial cost reduction more than enough to compensate for the increase in cost due to the duplex treatment of nitriding treatment and induction quenching.

When parts on which compound layer-protecting films according to the present invention have been formed are quenched after nitriding treatment by, for example, laser quenching with heating for a short period of several seconds at most or impact quenching with heating for a short period of several milliseconds, as an alternative to the quenching procedure by induction quenching according to the present invention, the nitride layer will be sufficiently protected so that the steel substrate beneath the layer may obtain a quenched structure corresponding to the quenching procedure used.

Next, applications of quenched iron and steel materials according to the present invention will be described. Quenched iron and steel members according to the present invention are suitable as those that are used in high-load and high-contact pressure regions. The shape and type of an iron and steel member are not particularly limited, examples of which may include axes, gears, pistons, shafts and cams. They are suitable for transmission-related parts of automobiles and/or construction machines and parts for power trains.

### EXAMPLES

Embodiments of the present invention will be described below with reference to Examples. The present invention will however not be limited by Examples below.

### Example 1

Using an SCM 440 thermal refining steel material of 8 mm in diameter and 50 mm in length as a substrate, after degreasing its surface, it was nitrocarburized in a molten salt bath at 560°C for one hour (Isonite treatment: Nihon Parkerizing Co., Ltd.), followed by oil cooling, to form a nitrogen compound layer based on iron nitride of approximately 7 µm in thickness on the surface of the steel material. This material was immersed in a surface conditioning liquid (PL-55, Nihon Parkerizing Co., Ltd.) for surface conditioning and then immersed in a manganese phosphate chemical conversion treatment liquid (PF-M1A, Nihon Parkerizing Co., Ltd.) for chemical conversion treatment at 95°C for one minute. The chemical conversion film was crystalline, mainly containing phosphoric acid, Mn and Fe, and had a film weight of 2.8 g/m². The compound layer after the chemical conversion treatment had a thickness of approximately 5 µm. Using an induction quenching device, heating was carried out in an ambient atmosphere for 0.8 second up to 860°C, immediately followed by water cooling for quenching.

### Example 2

Using an S 45 C thermal refining steel material of 8 mm in diameter and 50 mm in length as a substrate, after degreasing its surface, it was nitrocarburized in a molten salt bath at 560°C for two hours (Isonite treatment: Nihon Parkerizing Co., Ltd.), followed by oil cooling, to form a nitrogen compound layer based on iron nitride approximately 13 µm in thickness on the surface of the steel material. This material was immersed in a zirconium-based chemical conversion treatment liquid (PLC-2000, Nihon Parkerizing Co., Ltd.) for chemical conversion treatment at 45°C for five minutes. The chemical conversion film was amorphous, mainly containing Zr, Fe, a fluoride and a hydroxide, and had a film weight of 0.3 g/m². The nitrogen compound layer after chemical conversion treatment had a thickness of approximately 13 µm, showing little change in thickness of the compound layer by the chemical conversion treatment. Using an induction quenching device, heating was carried out for one second up to 820°C, immediately followed by water cooling for quenching.

### Example 3

Using an SCM 435 thermal refining steel material of 8 mm in diameter and 50 mm in length as a substrate, after degreasing its surface, it was nitrocarburized in a molten salt bath at 560°C for two hours (Isonite treatment: Nihon Parkerizing Co., Ltd.), followed by water cooling, to form a nitrogen compound layer based on iron nitride of approximately 10 µm in thickness on the surface of the steel material. This material was immersed in a surface conditioning liquid (PL-XG, Nihon Parkerizing Co., Ltd.) for surface conditioning and then immersed in a zinc phosphate chemical conversion treatment liquid (PB-L 47, Nihon Parkerizing Co., Ltd.) for chemical conversion treatment at 50°C for 10 minutes. The chemical conversion film was crystalline, mainly containing phosphoric acid, Zn and Fe, and had a film weight of 1.2 g/m². The compound layer after chemical conversion treatment had a thickness of approximately 9 µm. Using an induction quenching device, heating was carried out in an ambient atmosphere for one second up to 820°C, immediately followed by water cooling for quenching.

### Comparative Example 1

Using an SCM 440 thermal refining steel material of 8 mm in diameter and 50 mm in length as a substrate, after degreasing its surface, it was nitrocarburized in a molten salt bath at 560°C for one hour (Isonite treatment: Nihon Parkerizing Co., Ltd.), followed by oil cooling, to form a nitrogen compound layer based on iron nitride of approximately 7 µm in thickness on the surface of the steel material. Using an induction quenching device, heating was carried out in an ambient atmosphere for 0.8 second up to 860°C, immediately followed by water cooling for quenching.

### Evaluation Test

These treated steel materials were cut with a microcutter and embedded in a resin to observe their cross sections through a metallurgical microscope. Also, using these embedded samples, cross-sectional hardness was measured with a micro-Vickers hardness tester.

Table 1 lists the results of evaluations. An effective depth of hardening in the table refers to a depth (mm) from the surface of a portion having a hardness HV of 550 or higher. By way of example, Figs. 1 and 2 show the cross-sectional photographs of Example 1 and Comparative Example 1, respectively. Also, Fig. 4 shows the cross-sectional hardness distribution of Example 2.
[Table 1]

**Table 1: List of Results**

| | | Thicknesses of nitrogen compound layers | | Hardnesses of steel materials after induction quenching | |
|---|---|---|---|---|---|
| | | µm before induction quenching | µm after induction quenching | Hardnesses at depth 0.1 mm from surface | Effective depths of hardening layer, mm (Hv550) |
| Examples | 1 | 5 | 3 | Hv 821 | 1.27 |
| | 2 | 1.3 | 12 | Hv 721 | 0.73 |
| | 3 | 9 | 8 | Hv 772 | 0.62 |
| Comparative Example | 1 | 7 | 1 or less | Hv 815 | 1.28 |

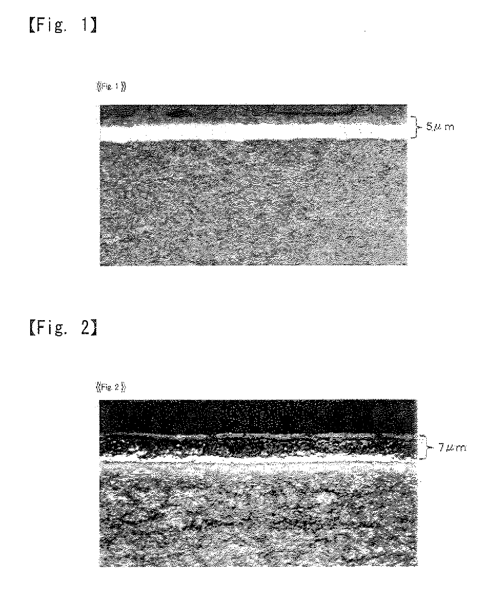

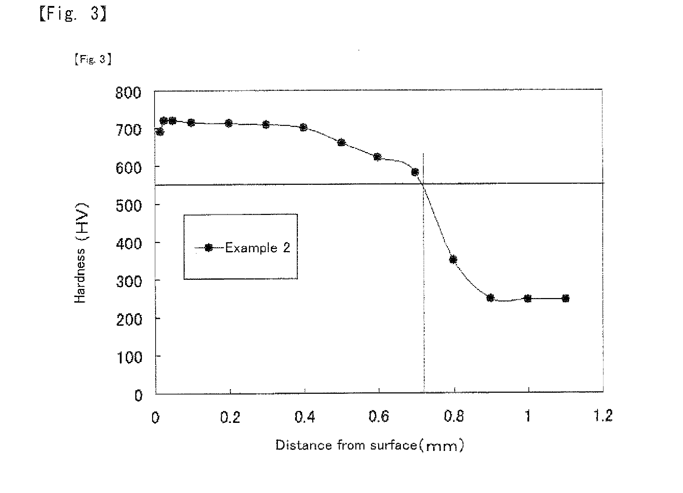

From Table 1, for Examples 1 to 3 according to the present invention, the nitrogen compound layers remained without suffering a significant damage even after induction quenching, as seen in Fig. 1. In Comparative Example 1 having no compound layer-protecting film, it was observed that the whole surface was oxidized, as seen in Fig. 2.

### BRIEF DESCRIPTION OF THE DRAWINGS

[Fig. 1]
   A cross-sectional photograph of a nitrogen compound layer after quenching the steel material of Example 1.
[Fig. 2]
   A cross-sectional photograph of a nitrogen compound layer after quenching the steel material of Comparative Example 1.
[Fig. 3]
   A cross-sectional hardness distribution of Example 2.

## Claims

1. A process for duplex heat treatment of combined nitriding treatment and induction quenching treatment on an iron and steel material, further comprising a chemical conversion treatment step for forming a chemical conversion film on a nitrogen compound layer formed on the iron and steel material by the nitriding treatment, after the nitriding treatment and before the induction quenching treatment.

2. The process for duplex heat treatment according to Claim 1, wherein the iron and steel material in which a nitrogen compound layer of 550 or higher in hardness HV and 1 µm or more formed by the nitriding treatment remains on a surface layer and a hardness distribution region having an HV higher than 550 containing a fine martensitic structure containing nitrogen under the layer exists over a distance of 200 µm or more from the surface is obtained by inhibiting decomposition of the nitrogen compound layer during the induction quenching by the chemical conversion film.

3. The process for duplex heat treatment according to Claim 1 or 2, wherein the chemical conversion film is 0.1 to 50 g/m² in film weight.

4. The process for duplex heat treatment according to any one of Claims 1 to 3, wherein the chemical conversion film contains at least one metal selected from the group consisting of Fe, Cr, Ni, Al, Zn, Mn, Mg, Zr, V, Hf, Si and Ca and at least one compound selected from the group consisting of a phosphate, a carbonate, an oxide, a hydroxide and a fluoride.

5. The process for duplex heat treatment according to any one of Claims 1 to 4, wherein forming the nitrogen compound layer is carried out by salt-bath nitrocarburizing treatment, gas nitriding treatment, gas nitrocarburizing treatment or plasma nitriding treatment, by which a nitrogen-containing compound layer of 1 to 30 µm is formed on the surface of the iron and steel material.

6. The process for duplex heat treatment according to any one of Claims 1 to 5, wherein the temperature for the nitriding treatment is 350 to 600°C and the temperature reached during the induction quenching is 750 to 860°C.

7. An iron and steel member obtained by the duplex heat treatment defined in any one of Claims 1 to 6, in which a nitrogen compound layer of 550 or higher in hardness HV and 1 µm or more remains on a surface layer and a hardness distribution region having an HV higher than 550 containing a fine martensitic structure containing nitrogen under the layer exists over a distance of 200 µm or more from a surface.

8. A chemical conversion treatment liquid containing a component to be deposited by using, as a driving force, etching of a surface of a compound layer containing nitrogen and iron, a component to be deposited by supersaturation or a component to be deposited by an electric driving force using an external power source, which is used, after nitriding treatment and before induction quenching treatment of an iron and steel material, for forming a chemical conversion film on the compound layer forked on the iron and steel material by the nitriding treatment for the purpose of preventing decomposition of the compound layer.
